(19) Europäisches Patentamt / European Patent Office / Office européen des brevets

(11) **EP 4 206 921 A1**

(12) **EUROPEAN PATENT APPLICATION**
published in accordance with Art. 153(4) EPC

(43) Date of publication:
**05.07.2023 Bulletin 2023/27**

(21) Application number: **21868685.5**

(22) Date of filing: **16.09.2021**

(51) International Patent Classification (IPC):
***G06F 9/50*** *(2006.01)*

(52) Cooperative Patent Classification (CPC):
**G06F 8/61; G06F 8/65; G06F 9/445; G06F 9/50**

(86) International application number:
**PCT/CN2021/118827**

(87) International publication number:
**WO 2022/057863 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.09.2020 CN 202010993180**

(71) Applicant: **Huawei Technologies Co., Ltd.
Shenzhen, Guangdong 518129 (CN)**

(72) Inventors:
• **CHEN, Ming**
  **Shenzhen, Guangdong 518129 (CN)**
• **YI, Pengxiang**
  **Shenzhen, Guangdong 518129 (CN)**
• **HU, Huifeng**
  **Shenzhen, Guangdong 518129 (CN)**

(74) Representative: **Huawei European IPR
Huawei Technologies Duesseldorf GmbH
Riesstraße 25
80992 München (DE)**

(54) **PROCESS CONTROL METHOD AND APPARATUS**

(57)    A process control method and apparatus are provided to implement intelligent control on each process in a terminal device, and prevent a process important to a user from being killed while memory is released, to improve user experience. The method includes: obtaining information, a package name, and a process name that are of a first process of a first application running on a terminal device; based on the information about the first process, determining to kill the first process; marking the package name and the process name that are of the first process; and based on marking results of a package name and a process name that are of a second process, controlling the second process.

FIG. 4

## Description

This application claims priority to Chinese Patent Application No. 202010993180.3, filed with China National Intellectual Property Administration on September 21, 2020 and entitled "PROCESS CONTROL METHOD AND APPARATUS", which is incorporated herein by reference in its entirety.

## TECHNICAL FIELD

This application relates to the terminal field, and more specifically, to a process control method and apparatus.

## BACKGROUND

Once a native low memory killer (low memory killer, LMK) is triggered in the Android system, an application important to a user may accordingly be killed. Therefore, application control of an original equipment manufacturer (original equipment manufacturer, OEM) actively kills an application when a device has low memory, thereby reducing a frequency of LMK triggering.

As the system is upgraded, memory bloat occurs in the system and applications. Therefore, more applications need to be killed when the device has low memory. In the prior art, because the entire application is killed, the application is started by the user next time by a cold start, affecting user experience. For example, when playing a game, the user switches to a WeChat application to reply to a message. Even if the time is very short, the game application is killed by the system. As a result, the user needs to restart the game, which greatly degrades user experience.

Therefore, how to balance memory and application keep-alive becomes particularly important.

## SUMMARY

This application provides a process control method and apparatus, to implement intelligent control on each process in a terminal device, and prevent a process important to a user from being killed while memory is released, to improve user experience.

According to a first aspect, a process control method is provided, including: obtaining information, a package name, and a process name about a first process of a first application running on a terminal device; based on the information about the first process, determining to kill the first process; marking the package name and the process name that are of the first process; and based on marking results of a package name and a process name that are of a second process, controlling the second process.

An existing control method may only implement application-level control. However, the process control method in embodiments of this application may implement process-level control. Whether the process is important to a user is determined based on multiple determining results of one or more features of the process, so as to decide to retain or kill the process. In this way, for a plurality of processes in an application, some processes may be retained and some processes may be killed, instead of retaining an entire application and occupying excessive memory, or instead of killing an entire application important to a user for the sake of memory, which affects user experience. When the process is killed, the process control method in embodiments of this application further includes marking a package name and a process name of the process, so as to subsequently control the process based on marking results.

In some possible implementations of the first aspect, the information about the first process includes: a main process, a foreground process or a background process, an audio interaction process, a navigation process, an upload or download process, a step counting process, adj information, and adjType information.

According to the process control method in embodiments of this application, a decision tree obtained by training is used to determine whether a process should be killed or retained based on process information including the foregoing. Whether the process is important to a user is determined based on the foregoing process information, so as to determine whether to kill the process.

In some possible implementations of the first aspect, duration of the control is a first time.

According to the process control method in embodiments of this application, a process is controlled for a continuous period of time, for example, the control is performed until an application of the process is uninstalled by the terminal device.

In some possible implementations of the first aspect, that the marking a package name and a process name of the first process further includes: marking a first moment at which the first process is killed.

In some possible implementations of the first aspect, that the based on marking results of a package name and a process name that are of a second process, controlling the second process includes: starting the second process; based on marking results of the package name and the process name that are of the second process, determining that the second process is a killed process; and prohibiting the second process from being started.

In some possible implementations of the first aspect, that the controlling the second process based on a marking result of the process name of the second process includes: starting the second process; based on the marking results of the package name and the process name that are of the second process, determining that the second process is a killed process; and determining whether the second process is a user-perceivable process, where the user-perceivable process includes a foreground process and/or a process visible on an interface and/or an alarm process; if the second process is a user-perceivable process, allowing the second process to be started; or if the second process is not a user-perceivable process, prohibiting the second process from being started.

After being killed, many processes inevitably are restarted automatically. If the processes are not controlled, the previous killing work will fall short. Therefore, the process control method in embodiments of this application further includes a control of a process that is automatically restarted after being killed. According to the process control method in embodiments of this application, whether the process is a process that is restarted after being killed is determined based on marking results of a package name and a process name that are of the process. If the process is a process that is restarted after being killed, the process is prohibited from being started. Alternatively, the process control method in embodiments of this application may also decide to prohibit or run a restart of the process by determining whether a restarted process is a user-perceivable process. If the process is a user-perceivable process, it is considered that the restart of the process is necessary. If the process is a process that cannot be perceived by the user, it is considered that the restart of the process is unnecessary.

In some possible implementations of the first aspect, that allowing the first process to be restarted further includes: obtaining a second moment at which the first process is restarted; and if an interval between the second moment and the first moment is less than a first threshold, increasing the quantity of valid restart times of the first process by 1.

In some possible implementations of the first aspect, before the killing the first process, the method further includes: obtaining a quantity of valid restart times of the first process; and if the quantity of valid restart times is greater than a second threshold, retaining the first process.

Because a feature of a process determined by an intelligent decision engine is limited, in order to prevent a process important to a user from being killed by mistake, the process control method in embodiments of this application further includes a fault tolerance mechanism of the intelligent decision engine. That is, when a control decision result is killing, a quantity of valid restart times of the process is obtained, and whether the process really needs to be killed is determined based on the quantity of valid restart times.

According to a second aspect, a process control apparatus is provided, including: an obtaining module, configured to obtain information, a package name and a process name about a first process of a first application running on a terminal device; a determining module, configured to determine, based on the information about the first process, to kill the first process; and an execution module, configured to mark the package name and the process name that are of the first process. The execution module is further configured to, based on marking results of a package name and a process name that are of a second process, control the second process.

In some possible implementations of the second aspect, the information about the first process includes: a main process, a foreground process or a background process, an audio interaction process, a navigation process, an upload or download process, a step counting process, adj information, and adjType information.

In some possible implementations of the second aspect, duration of the control is a first time period.

In some possible implementations of the second aspect, that the execution module marks a package name and a process name of the first process further includes: marking a first moment at which the first process is killed.

In some possible implementations of the second aspect, that the execution module, based on marking results of a package name and a process name that are of a second process, controls the second process includes: starting the second process; based on marking results of the package name and the process name that are of the second process, determining that the second process is a killed process; and prohibiting the second process from being started.

In some possible implementations of the second aspect, that the execution module, based on marking results of a package name and a process name that are of a second process, controls the second process includes: starting the second process; based on the marking results of the package name and the process name that are of the second process, determining that the second process is a killed process; and determining whether the second process is a user-perceivable process, where the user-perceivable process comprises a foreground process and/or a process visible on an interface and/or an alarm process; if the second process is a user-perceivable process, allowing the second process to be started; or if the second process is not a user-perceivable process, prohibiting the second process from being started.

In some possible implementations of the second aspect, that the execution module allows the first process to be restarted further includes: obtaining a second moment at which the first process is restarted; and if an interval between the second moment and the first moment is less than a first threshold, increasing the quantity of valid restart times of the first process by 1.

In some possible implementations of the second aspect, before the execution module kills the first process, the method further includes: obtaining the quantity of valid restart times of the first process; and if the quantity of valid restart times is greater than a second threshold, retaining the first process.

According to a third aspect, an electronic device includes: a memory, configured to store a program; and a processor, configured to execute the program stored in the memory, where when the program stored in the memory is executed, the processor is configured to perform the method in the first aspect and the possible implementations of the first aspect and the method in the second aspect and the possible implementations of the second aspect.

According to a fourth aspect, a computer-readable storage medium is provided, where the computer-readable storage medium stores program code. The program code includes instructions for performing some or all steps of the method in the first aspect and the possible implementations of the first aspect and the method in the second aspect and the possible implementations of the second aspect.

According to a fifth aspect, this technical solution provides a computer program product. When the computer program product runs on an electronic device, the electronic device is enabled to perform the process control method in the first aspect and the possible implementations of the first aspect and the method in the second aspect and the possible implementations of the second aspect.

According to a sixth aspect, this technical solution provides a chip system, where the chip system includes at least one processor. When program instructions are executed in the at least one processor, functions of the possible method in the first aspect and the possible implementations of the first aspect and the possible method in the second aspect and the possible implementations of the second aspect are implemented on the electronic device.

## BRIEF DESCRIPTION OF DRAWINGS

FIG. 1 is a schematic diagram of a structure of an electronic device according to an embodiment of this application;
FIG. 2 is a schematic block diagram of a user interface according to an embodiment of this application;
FIG. 3 is a schematic diagram of a system architecture to which a process control method is applied according to an embodiment of this application;
FIG. 4 is a schematic flowchart of a process control method according to an embodiment of this application;
FIG. 5 is a schematic block diagram of an intelligent decision engine according to an embodiment of this application;
FIG. 6 is a schematic block diagram of control of a restart process and correction of an intelligent decision engine according to an embodiment of this application;
FIG. 7 is a schematic block diagram of a process control apparatus according to an embodiment of this application; and
FIG. 8 is a schematic diagram of a structure of a process control apparatus according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The terms used in the following embodiments are merely for the purpose of describing specific embodiments, but are not intended to limit this application. As used in the specification of this application and the appended claims, the singular expression "a", "an", "the", "the foregoing", "such a", and "this" are intended to also include expressions such as "one or more", unless otherwise clearly indicated in the context. It should be further understood that in the following embodiments of this application, "at least one" or "one or more" means one, two or more. And/or describes an association relationship between associated objects, and indicates that three relationships may exist. For example, A and/or B may indicate the following cases: only A exists, both A and B exist, and only B exists, where A and B may be singular or plural. The character "/" generally indicates an "or" relationship between the associated objects.

Referring to "an embodiment" or "some embodiments" or the like described in this specification of this application means that a particular feature, structure, or characteristic described with reference to the embodiment is included in one or more embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The process control method provided in embodiments of this application may be applied to an electronic device. The electronic device may be a terminal device, and the terminal device may also be referred to as user equipment (User Equipment, UE), a mobile station (Mobile Station, MS), a mobile terminal (Mobile Terminal), or the like. Optionally, the terminal device (referred to as a terminal) may have a capability of communicating with one or more core networks by using a radio access network (Radio Access Network, RAN). For example, the terminal may be a mobile phone (or referred to as a "cellular" phone), a set-top box, a wearable device, an Internet of Things (Internet of Things, IOT) device, a computer with a mobile nature, or the like. For example, the terminal may alternatively be a portable, pocket-sized, handheld, computer built-in, or in-vehicle mobile apparatus. It should be understood that, in addition to the terminal device, the process control method provided in embodiments of this application may also be applied to another type of computer system.

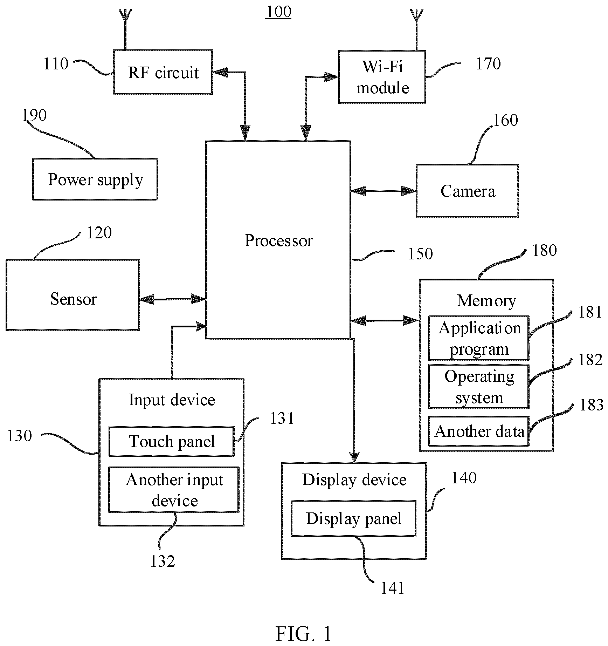

Refer to FIG. 1. FIG. 1 is a schematic diagram of a structure of an electronic device according to an embodiment of this application. As shown in FIG. 1, an electronic device 100 includes a memory 180, a processor 150, and a display device 140. The memory 180 stores a computer program (or referred to as program code), and the computer program includes an operating system program 182, an application 181, and the like. The processor 150 is configured to read the computer program in the memory 180, and then perform a method defined by the computer program. For example, the processor 150 reads the operating system program 182 to run the operating system on the electronic device 100 and implement various functions of the operating system, or reads one or more applications 181 to run an application on the electronic device or process a broadcast message of an application, or the like.

The processor 150 may include one or more processors. For example, the processor 150 may include one or more central processing units, or may include one or more central processing units and one or more application processors. When the processor 150 includes a plurality of processors, the plurality of processors may be integrated into a same chip, or each of the plurality of processors may be an independent chip. One processor may include one or more processor cores (or referred to as processing cores). The following embodiments are described by taking a multi-core as an example. However, the process control method provided in embodiments of this application may also be applied to a single-core processor. A time-sharing working principle of the single-core processor is used to run a plurality of applications in parallel.

In addition, the memory 180 further stores other data 183 in addition to the computer program. The other data 183 may include data generated after the operating system 182 or the application 181 is run, or the like. The data includes system data (for example, a configuration parameter of the operating system) and user data, for example, resource usage information about each application is typical user data.

The memory 180 generally includes an internal memory and an external memory. The internal memory may be a random access memory, a read-only memory, a cache, or the like. The external memory may be a hard disk, an optical disc, a universal serial bus (Universal Serial Bus, USB) disk, Floppy disk a tape drive, or the like. The computer program is generally stored in the external memory, and the processor loads the computer program from the external memory to the internal memory before processing the computer program.

The operating system program 182 includes a computer program that may implement a resource control method provided in embodiments of this application. Therefore, after the processor 150 reads the operating system program 182 and runs the operating system, the operating system may be provided with the process control method provided in embodiments of this application.

The electronic device 100 may further include an input device 130 to receive input digital information, character information, or a contact touch operation/non-contact gesture, and to generate signal input related to user settings and function control of the electronic device 100. Specifically, in embodiments of this application, the input device 130 may include a touch panel 131. The touch panel 131, also referred to as a touchscreen, may collect a touch operation performed by a user on or near the touch panel 131 (for example, an operation performed by the user on the touch panel 131 or on the touch panel 131 by using any suitable object or accessory such as a finger or a stylus), and drive a corresponding connection apparatus based on a preset program. Optionally, the touch panel 131 may include two parts: a touch detection apparatus and a touch controller. The touch detection apparatus detects a touch direction of the user, detects a signal brought by a touch operation, and transmits the signal to the touch controller. The touch controller receives touch information from the touch detection apparatus, converts the touch information into touch point coordinates, and sends the touch point coordinates to the processor 150, and is capable of receiving and executing a command sent by the processor 150. For example, the user double-taps an icon of an application on the touch panel 131 by using a finger. The touch detection apparatus detects a signal brought by the double-tap, and then transmits the signal to the touch controller. The touch controller then converts the signal into coordinates and sends the coordinates to the processor 150. The processor 150 performs an operation such as starting the application based on the coordinates and the type (for example, double-tap) of the signal. Finally, an operation interface of the application is displayed on a display panel 141, so as to "open" the application.

The touch panel 131 may be implemented in a plurality of types such as a resistive type, a capacitive type, an infrared type, and a surface acoustic wave type. In addition to the touch panel 131, the input device 130 may further include another input device 132. The another input device 132 may include but is not limited to one or more of a physical keyboard, a function key (such as a volume control key or a power on/off key), a trackball, a mouse, a joystick, and the like.

The display device 140 included in the electronic device 100 includes a display panel 141, and is configured to display information input by a user or information provided for a user, various menu interfaces of the electronic device 100, and the like, and is mainly configured to display information such as a user operation interface of an application in embodiments of this application. Optionally, the display panel 141 may be configured in a form of a liquid crystal display (Liquid Crystal Display, LCD), an organic light emitting diode (Organic Light-Emitting Diode, OLED), or the like. In some other embodiments, the touch panel 131 may cover the display panel 141 to form a touch display screen.

In addition to the foregoing, the electronic device 100 may further include a power supply 190 for supplying power to another module and a camera 160 for taking a photo or a video. The electronic device 100 may further include one or more sensors 120, for example, a gravity sensor, an acceleration sensor, a light sensor, and the like. The electronic device 100 may further include a radio frequency (English: Radio Frequency, RF) circuit 110, configured to perform network communication with a wireless network device, and may further include a Wi-Fi module 170, configured to perform Wi-Fi communication with another device, and the like.

In the following embodiments, the process control method provided in embodiments of this application is described by using an electronic device as an execution body. The process control method provided in embodiments of this application may be implemented in the operating system program 182 shown in FIG. 1.

In a running process of an application of an electronic device, running of the application occupies a relatively large quantity of resources, resulting in a problem of an excessively slow running speed or stuck running of an operating system program is slow or stuck occurs. The development of applications adopts a multi-process mechanism. After an application is started, there are usually a plurality of active processes, and each of the processes occupies some memory. For example, after We-Chat is started, there are six active processes, occupying more than 600 MB of the memory in total. Because applications are complex, problems such as mutual wake-up of processes in the applications and breakdown of the main process may occur after an application is killed. Therefore, the current application control (such as application killing and automatic startup control) of OEM is control based on an application dimension. That is, the process of an application meets protection requirement, in this case, the entire application is protected. Even if LMK is triggered, the application is not killed, and the application memory cannot be released. As a result, more applications need to be killed to make up for insufficient memory.

For example, when a user performs price comparison by switching to and from Taobao, JD.com, and Pinduoduo applications, and when the memory of a mobile phone is relatively low, the applications running in the mobile phone are killed. Assuming that a browser has a process for downloading in the background, to ensure smooth download, a conventional technology protects an entire process of the browser application, and may kill memory of only Taobao, Jingdong, or Pinduoduo application. As a result, the user cannot implement application switching for price comparison, which degrades user experience.

Existing application control is control based on an application dimension, and some memory of an application cannot be reclaimed. In addition, a problem that the application is automatically started after being killed cannot be resolved. Therefore, an embodiment of this application provides a process control method, and may implement control based on a process dimension, so that the control is more refined. In addition, a problem that a single process is repeatedly started after being killed can be resolved, to improve user experience.

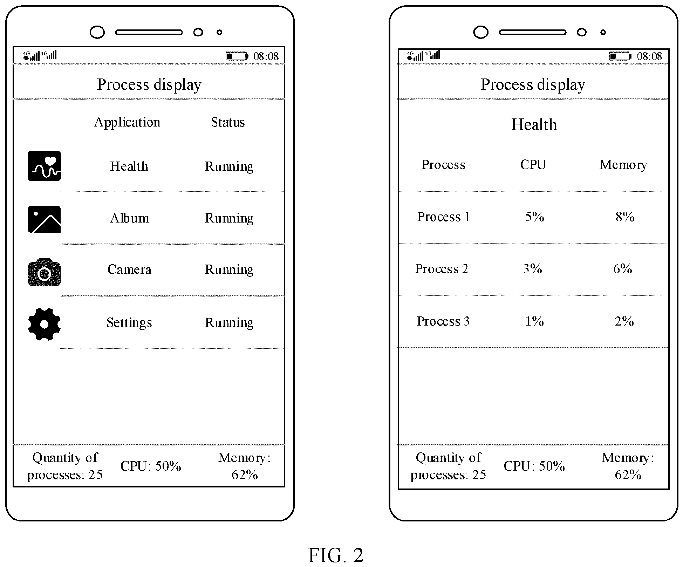

FIG. 2 is a schematic block diagram of a user interface according to an embodiment of this application. The electronic device in FIG. 2 may be the electronic device 100 in FIG. 1, and the user interface shown in FIG. 2 is displayed by using the display device 140. As shown in FIG. 2, a user may view a process status in the electronic device by using a process display. The process display may display one or more applications that are running in the electronic device. For example, Health, Camera, Album, Settings, or the like. A status of a running process of the application may be specifically viewed by tapping a specified application. For example, tapping Health to view that three processes of the application are running, where each of processes occupies different CPUs and memories. According to the process control method in embodiments of this application, an application process may be automatically controlled. After the process is killed, the process is not displayed in the process display.

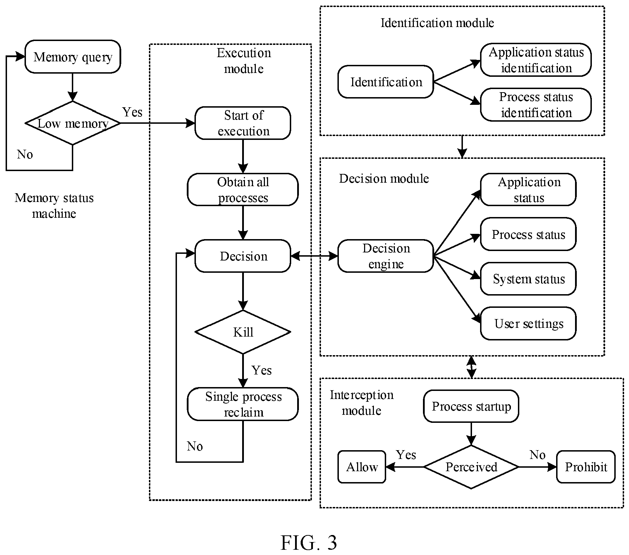

FIG. 3 is a schematic diagram of a system architecture to which a process control method is applied according to an embodiment of this application.

An identification module is configured to identify information about an application status and a process status.

An execution module is configured to kill a single process.

A decision module is configured to decide whether to kill the single process or decide whether to intercept startup of the single process.

An interception module is configured to intercept automatic startup of the killed process.

The memory state machine checks a current memory status of the terminal device at intervals, where the interval may be a manually preset time value. When the memory of the terminal device reaches a low memory, for example, reaches a preset low memory value, the execution module obtains all processes currently running on the terminal device, and separately put these processes into the decision module for performing decision-making. When making a process decision, the decision module queries an application status identification result and a process status identification result of the identification module, decides whether to kill a single process based on the system status and user settings, and returns a decision result to the execution module. The execution module determines whether to perform killing based on the decision result. If a single process needs to be killed, the execution module kills the single process. If a single process does not need to be killed, the execution module performs determining on the next process. After the single process is killed, if the single process is automatically started again, the startup of an Android process depends on four large components (activity, service, content provider, and broadcast receiver). Therefore, the interception point is marked where each of the four large components is started, and whether to perform interception is decided when the four large components are started. If the process needs to be intercepted, directly return from where each of the four large components is started. The decision is to decide whether to intercept the automatic startup of the single process based on whether the process is a user-perceivable process. If the single process is a user-perceivable process, the single process is allowed to be started. If the single process is not a user-perceivable process, the interception module intercepts the process and forbids the single process to be started.

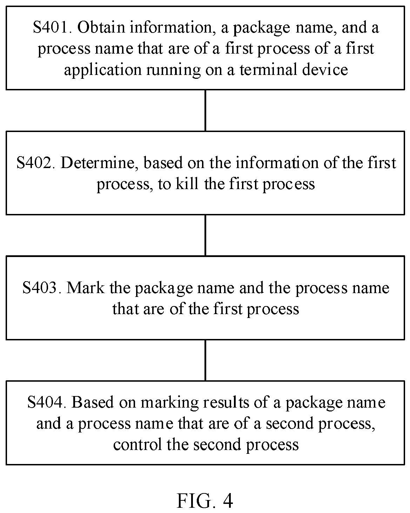

FIG. 4 is a schematic flowchart of a process control method according to an embodiment of this application. As shown in FIG. 4, steps 401 to step 403 are included, and these steps are described in detail below.

S401. Obtain information, a package name, and a process name that are of a first process of a first application running on a terminal device.

According to the process control method in embodiments of this application, all running processes in the terminal device may be controlled. Herein, one process in an application is taken as an example for description. For a control process of another process, refer to the control process of the process. A package name is a unique identifier of an Android application package. When an Android system manages an application, the package name is also used for indexing. The package name is determined at the beginning of the creation of an Android application project. When an Android application is started, a process name of a corresponding process is generally a package name.

S402. Determine, based on the information about the first process, to kill the first process.

Specifically, feature information about the first process includes whether the first process is a foreground/background process, whether the first process is a main process, adj, and adjType, whether the first process is an audio interaction process, whether the first process is a health step counting process, whether the first process is a process using GPS, a traffic usage status of the first process, and the like. It should be understood that the foregoing is merely an example of the feature information about the process in the process control method in embodiments of this application, and does not constitute a limitation on embodiments of this application. In addition to the foregoing example, the feature information in embodiments of this application may further include feature information about another possible process.

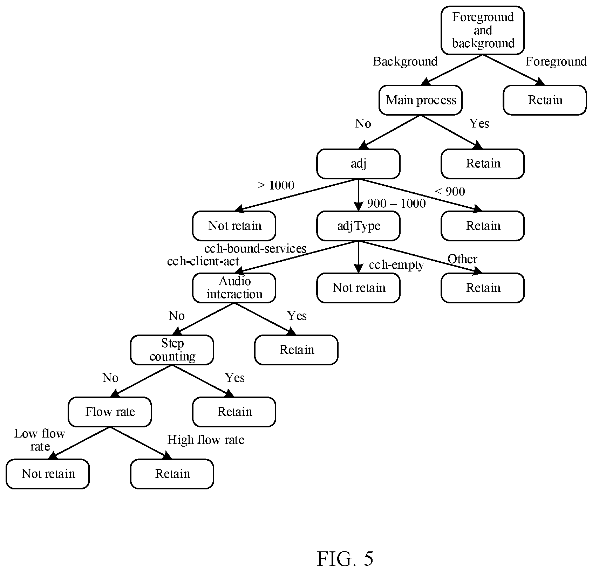

Determine to kill the first process based on the information about the first process. Specifically, the information about the first process may be input into an intelligent decision engine. The intelligent decision engine outputs a control decision result of the first process based on the information about the first process, where the control decision result includes killing and retaining. The intelligent decision engine is obtained by pre-training based on sample data, and the sample data includes information about a sample process and a control decision result of the sample process. For example, the intelligent decision engine may be obtained based on a decision tree algorithm. The information about the sample process may be the process information in the foregoing example. The control decision result of the sample process may be determined manually. For example, if the sample process is a foreground process, the control decision result is to retain the sample process, and if the sample process is a background process, other feature information about the sample process is determined. The intelligent decision engine outputs the control decision result of the first process based on the information about the first process, which may specifically refer to the description of a decision tree of the intelligent decision engine in FIG. 5. For brevity, details are not described herein in embodiments of this application. Specifically, the intelligent decision engine may sequentially determine a plurality of features of the first process, and output the control decision result after sequentially determining the plurality of features. If the control decision result is killing, the first process is killed; or if the control decision result is retaining, the first process is retained. In particular, the control decision result of the first process herein is to kill the first process, and then the following steps are performed.

S403. Mark a package name and a process name that are of the first process.

Specifically, after the first process is killed, the package name and the process name that are of the first process are marked, and the process is marked as a killed process.

S404. Based on marking results of a package name and a process name that are of a second process, control the second process.

The second process may be the first process that is restarted after being killed, or may be another process that has not been killed. Whether the second process has been killed may be determined by using the package name and the process name that are of the second process.

An existing control method can only implement application-level control. However, the process control method in embodiments of this application can implement process-level control. Whether the process is important to a user is determined based on multiple determining results of one or more features of the process, so as to decide to retain or kill the process. In this way, for a plurality of processes in an application, some processes may be retained and some processes may be killed, instead of retaining an entire application and occupying excessive memory, or instead of killing an entire application important to a user for the sake of memory, which affects user experience.

Optionally, duration of the control of the second process is a first time period. For example, the first time period may be from a time point at which the package name and the process name that are of the second process are marked to a time point at which the second process is uninstalled from the electronic device.

Optionally, if the control decision result of the first process is killing, the package name and the process name that are of the first process are marked after determining to kill the first process. The method in embodiments of this application further includes: marking a moment at which the first process is killed, where the moment is marked as a first moment, so that the first process is determined when the first process is started again subsequently.

Optionally, that controlling the second process based on marking results of the package name and the process name that are of the second process includes: when the second process is started, determining whether the second process is a killed process based on the marking results of the package name and the process name that are of the second process. If the second process is a killed process, the second process is directly prohibited from being started.

Optionally, the method in embodiments of this application further includes: when the second process is started, determining whether the second process is a killed process based on the marking results of the package name and the process name that are of the second process. If the second process is a killed process, whether the second process is a user-perceivable process is further determined. The user-perceivable process includes but is not limited to these cases: the process is a foreground process, the process has a visible interface, the process is a type of alarm process, or the like. If the started second process is not a user-perceivable process, the second process is prohibited from being restarted; or if the second process is a user-perceivable process, the second process is allowed to be restarted, and a restart moment of the second process is recorded and is recorded as the second moment.

Optionally, when the second process is allowed to be started, the method in embodiments of this application further includes: comparing the second moment with the first moment, and if an interval between the second moment and the first moment is less than a first threshold, increasing the quantity of valid restart times of the first process by 1. The first threshold may be a manually specified time value.

After being killed, many processes inevitably are restarted automatically. If the processes are not controlled, the previous killing work will fall short. Therefore, the process control method in embodiments of this application further includes a control of a process that is automatically restarted after being killed. Deciding to prohibit or run a restart of the process by determining whether a restarted process is a user-perceivable process. If the process is a user-perceivable process, it is considered that the restart of the process is necessary. If the process is a process that cannot be perceived by a user, it is considered that the restart of the process is unnecessary.

Optionally, in S402, if it is determined that the control decision result of the first process is killing, before the killing the first process, the method in embodiments of this application further includes: obtaining a quantity of valid restart times of the first process, and if the quantity of valid restart times of the first process is greater than a second threshold, in this case, it is considered that the first process is important to the user, and the first process is retained. The second threshold may be a quantity of times that is manually specified.

Because a feature of a process determined by an intelligent decision engine is limited, in order to prevent a process important to a user from being killed by mistake, the process control method in embodiments of this application further includes a fault tolerance mechanism of the intelligent decision engine. That is, when a control decision result is killing, a quantity of valid restart times of the process is obtained, and whether the process really needs to be killed is determined based on the quantity of valid restart times.

Therefore, the process control method according to embodiments of this application includes control of a running process, control of a restarted process, and correction of process control, so that intelligent control of each process in the terminal device can be implemented, and a process important to a user can be prevented from being killed while memory is released, to improve user experience.

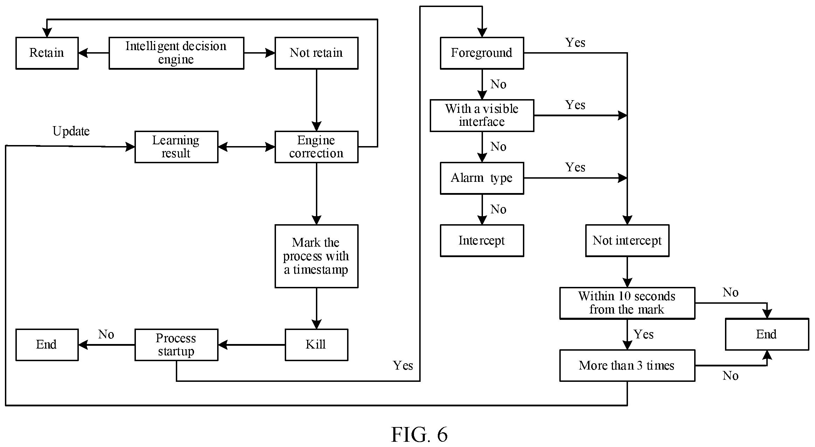

The process control method in embodiments of this application includes process killing and process restart interception. The following describes in detail the process control method in embodiments of this application with reference to FIG. 5 and FIG. 6.

In the process control method in embodiments of this application, first, an intelligent decision engine obtained by training based on a decision tree algorithm. The training method for the intelligent decision engine includes the following steps.

(1) Decision Tree Feature Selection

By analyzing beta logs in a recent period, and based on information gain, decision tree features are selected, including: status of ongoing foreground and background and main processes, adj, adjType, audio interaction, health step counting, traffic usage status, and the like. The recent period of time may be any manually specified period of time, for example, three months. The adj is a flag indicating an importance degree of a process of the Android system, and a smaller value of the adj indicates a lower importance degree of the process. The adjType is also used to define the degree of importance of a process and is used to distinguish different scenarios in the same adj condition. For example, if the value of adj is 0, it indicates that the process is of high importance. In this case, if adjType is top-activity, it indicates that the process is a foreground process; and if adjType is exec-service, it indicates that the process is a process that is being called back by the foreground.

(2) Decision Tree Generation

In the process control method in embodiments of this application, an information gain rate is calculated by using a C4.5 algorithm, and the information gain rate is used as a node splitting rule. The information gain rate is calculated as follows:

$$Gain(D,a) = Ent(D) - \sum_{v=1}^{V} \frac{|D^v|}{|D|} Ent(D^v).$$

$D$ represents a training dataset, $a$ represents a decision tree feature, $V$ represents a quantity of features, $D^v$ represents the quantity of features $a$ in the training dataset, and $Ent()$ represents an information entropy.

(3) Pruning

A complete decision tree generated based on the C4.5 algorithm is overfitting for a training sample. Because the complete decision tree describes the features of the training sample too accurately to implement reasonable analysis of a new sample, the decision tree needs to be pruned. In the process control method in embodiments of this application, a pessimistic error pruning (pessimistic error pruning, PEP) algorithm in a postpruning (postpruning) method is used. The postpruning method first constructs a complete decision tree, runs the decision tree to overfit training data, and then replaces node subtrees having low confidence with leaf nodes. It is difficult to accurately estimate when to stop the growth of the decision tree in the pruning method, therefore, the postpruning method is more convenient. The PEP algorithm determines the pruning of a subtree based on an error rate before and after pruning. This algorithm uses a top-down manner. If a non-leaf node meets the following inequality, the leaf node is pruned:

$$e'(t) \le e'(T_t) + S_e(e'(T_t)).$$

$t$ represents a node in the decision tree, $T_t$ represents a subtree including a node $t$, $e()$ represents... $e'()$, and $S_e()$ represents a standard deviation.

The intelligent decision engine tree shown in FIG. 5 may be obtained by the foregoing training. Whether a single process in the application needs to be killed may be determined based on the intelligent decision engine tree. For example, for a single process in a specified application, it is first determined, based on an intelligent decision engine tree, whether the process runs in the foreground or in the background. If the process runs in the foreground, the process is retained (not killed), or if the process runs in the background, whether the process is a main process is determined. If the process is the main process, the process is retained, or if the process is not the main process, the adj value of the process is determined. If the adj value of the process is less than 900, the process is retained, or if the adj value of the process is greater than 1000, the process is killed. If the adj value of the process is within the interval [900,1000], the adjType of the process is determined. If adjType of the process is another process, the process is retained. If the adjType of the process is cch-empty, indicating an empty process, the process is killed. If the adjType of the process is cch-bound-services, indicating a service bound to the foreground, or the adjType of the process is cch-client-act, indicating a process associated with a foreground interface, then whether the process is for audio interaction is determined. If the process is for audio interaction, for example, for voice recording or playing, then the process is retained. If the process is not for audio interaction, whether the process is for health step counting is further determined. If the process is for health step counting, the process is retained. If the process is not for health step counting, a traffic usage status of the process is determined. If the traffic usage status indicates a high flow rate, the process is retained, or if the traffic usage status indicates a low flow rate, the process is killed.

Therefore, whether a process of an application should be killed may be determined based on a trained intelligent decision engine tree. Compared with the conventional technology, the process control method in embodiments of this application may implement control of a single process of an application.

After a process is killed, the process may be automatically restarted. If the process is not intercepted, the process still occupies the memory. Therefore, the process control method in embodiments of this application further includes interception of a process restart.

As shown in FIG. 6, when a killed process is ready for restart, the process control method in embodiments of this application determines whether the process is a user-perceivable process. The user-perceivable process includes but is not limited to these cases: the process is a foreground process, the process has a visible interface, the process is a type of alarm process, or the like. If the process is not a user-perceivable process, restart of the process is intercepted. If the process is a user-perceivable process, restart of the process is allowed, and restart information about the process is recorded.

The process control method in embodiments of this application further includes a correction mechanism of an intelligent decision engine. When the intelligent decision engine shown in FIG. 5 determines that a process is not retained, before killing the process, a timestamp is marked for the process, to indicate a moment at which the process is killed. If the process is restarted, the process ends. If the process is automatically restarted, and it is determined that the process is a user-perceivable process as described above, restart of the process is allowed. A time interval between the restart time of the process and the marked timestamp is determined. If the time interval is less than 10 seconds, the quantity of restart times of the process is increased by 1; otherwise, the process ends. If the quantity of valid restart times of the process is greater than 3, it is determined that the process is a process that should not be killed, and the determining result is updated to a learning result corrected by the engine; otherwise, the process ends. When a next determining result of the intelligent decision engine indicates a specified process not being retained, before killing the process, the intelligent decision engine determines whether the process is a process that should not be killed and that is in the learning result. If the process is a process that should not be killed and that is in the learning result, the process is retained. If the process is not a process that should not be killed and that is in the learning result, the process is still killed. To avoid a logic change caused by an application upgrade, duration of the learning result and the marking is from a time point at which the marking is performed to a time point at which the application is uninstalled.

The interception mechanism in the process control method in embodiments of this application may resolve a problem that a process occupies memory because the process is automatically restarted repeatedly after being killed. The correction mechanism of the intelligent decision engine makes the intelligent decision engine more intelligent to prevent killing a process important to a user due to incorrect determining and therefore degrading user experience.

According to the process control method in embodiments of this application, a quantity of keep-alive applications of the terminal device on 6G increases by 0.6, and increases by 8.5%. The keep-alive rate of the application used last time increased from 95.85% to 98.50%. The application used in the last two times increased from 87.15% to 94.12%. The beta big data shows that the quantity of times that triggered the original killing is greatly reduced. The quantity of times that WeChat is killed is reduced by about 40%.

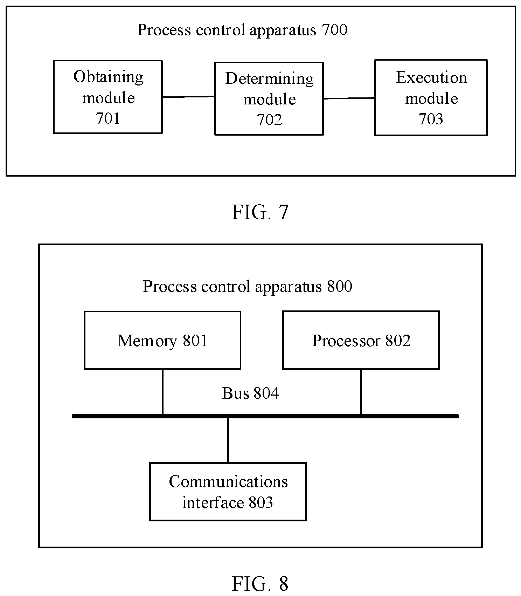

FIG. 7 is a schematic block diagram of a process control apparatus according to an embodiment of this application. As shown in FIG. 7, the process control apparatus includes an obtaining module 701, a determining module 702, and an execution module 703.

The obtaining module 701 is configured to obtain information, a package name, and a process name that are of a first process of a first application running on a terminal device.

The determining module 702 is configured to determine, based on the information about the first process, to kill the first process.

The execution module 703 is configured to mark the package name and the process name that are of the first process.

The execution module 703 is further configured to, based on marking results of a package name and a process name that are of a second process, control a second process.

Optionally, the information about the first process includes: a main process, a foreground process or a background process, an audio interaction process, a navigation process, an upload or download process, a step counting process, adj information, and adjType information.

Optionally, duration in which the execution module 703 controls the second process is a first time period. For example, the first time period may be a time period from a time point at which a package name and an application name that are of the second process are marked to a time point at which the second process is uninstalled from the electronic device.

Optionally, that the execution module 703 marks the package name and the process name that are of the first process further includes: marking a first moment at which the first process is killed.

Optionally, that the execution module 703 controls the second process based on marking results of the package name and the process name that are of the second process includes: starting the second process; based on marking results of the package name and the process name that are of the second process, determining that the second process is a killed process; and prohibiting the second process from being started.

Optionally, that the execution module 703 controls the second process based on marking results of the package name and the process name that are of the second process includes: starting the second process; based on the marking results of the package name and the process name that are of the second process, determining that the second process is a killed process; and determining whether the second process is a user-perceivable process, where the user-perceivable process includes a foreground process and/or a process visible on an interface and/or an alarm process; if the second process is a user-perceivable process, allowing the second process to be started; or if the second process is not a user-perceivable process, prohibiting the second process from being started.

Optionally, the allowing the second process to be started further includes: obtaining a second moment at which the second process is started; and if an interval between the second moment and the first moment is less than a first threshold, increasing the quantity of valid restart times of the first process by 1.

Optionally, the determining module 702 is provided.

Before the determining module determines to kill the first process, the method further includes: obtaining a quantity of valid restart times of the first process; and if the quantity of valid restart times is greater than a second threshold, retaining the first process.

FIG. 8 is a schematic diagram of a structure of a process control apparatus according to an embodiment of this application. The process control apparatus 800 shown in FIG. 8 includes a memory 801, a processor 802, a communications interface 803, and a bus 804. Mutual communication connections of the memory 801, the processor 802, and the communications interface 803 are implemented by using the bus 804.

The communications interface 803 is equivalent to the obtaining module 701 in the process control apparatus 700, and the processor 802 is equivalent to the determining module 702 and the execution module 703 in the process control apparatus 700. The modules and units in the process control apparatus 800 are described in detail below.

The memory 801 may be a read only memory (read only memory, ROM), a static storage device, a dynamic storage device, or a random access memory (random access memory, RAM). The memory 801 may store a program. When the program stored in the memory 801 is executed by the processor 802, the processor 802 and the communications interface 803 are configured to perform the steps of the process control method in embodiments of this application. Specifically, the communications interface 803 may obtain from a memory or another device information, a package name, and a process name that are of a process, and then the processor 802 performs process control on the process.

The processor 802 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, so as to implement functions that need to be performed by units in the process control apparatus in embodiments of this application (for example, the processor 802 may implement functions that need to be performed by the determining module 702 and the execution module 703 in the foregoing process control apparatus 700), or perform the process control method in embodiments of this application.

The processor 802 may be an integrated circuit chip and has a signal processing capability. In an implementation process, steps of the process control method in embodiments of this application may be implemented by using a hardware integrated logical circuit in the processor 802, or by using instructions in a form of software.

The foregoing processor 802 may be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The foregoing general purpose processor may be a microprocessor, or the processor may also be any conventional processor or the like. Steps of the methods disclosed with reference to embodiments of this application may be directly performed and accomplished by a hardware decoding processor, or may be performed and accomplished by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 801. The processor 802 reads information from the memory 801, and in combination with hardware of the processor 802, performs functions that need to be performed by the units included in the process control apparatus in embodiments of this application, or performs the process control method in the method embodiments of this application.

A transceiver apparatus such as, without limitation, a transceiver is used at the communications interface 803, to implement communication between the apparatus 800 and another device or a communications network. For example, the information, the package name, and the process name about the process may be obtained by the communications interface 803.

The bus 804 may include a channel that transmits information between various parts (for example, the memory 801, the processor 802, and the communications interface 803) of the apparatus 800.

It should be understood that although only the memory, the processor, and the communications interface are shown in the foregoing apparatus 800. However, in a specific implementation process, a person skilled in the art should understand that the apparatus 800 may further include another component required for normal running. In addition, according to a specific requirement, a person skilled in the art should understand that the apparatus 800 may further includes hardware components for implementing other additional functions. In addition, a person skilled in the art should understand that the apparatus 800 may include only components required for implementing embodiments of this application, but not necessarily include all the components shown in FIG. 8.

In an embodiment, when the processing module is a processor and the storage module is a memory, the electronic device in this embodiment may be a device having the structure shown in FIG. 1.

This embodiment further provides a computer storage medium. The computer storage medium stores a computer instruction. When the computer instruction runs on an electronic device, the electronic device is enabled to perform the foregoing related method steps to implement the process control method in the foregoing embodiment.

This embodiment further provides a computer program product. When the computer program product runs on a computer, the computer is enabled to perform the foregoing related steps, to implement the process control method in the foregoing embodiment.

In addition, an embodiment of this application further provides an apparatus. The apparatus may be specifically a chip, a component, or a module, and the apparatus may include a processor and a memory that are connected. The memory is configured to store computer-executable instructions. When the apparatus runs, the processor may execute the computer-executable instructions stored in the memory, so that the chip performs the process control method in the foregoing method embodiments.

The electronic device, the computer storage medium, the computer program product, or the chip provided in the embodiments is configured to perform a corresponding method provided above. Therefore, for beneficial effects that may be achieved by the electronic device, the computer storage medium, the computer program product, or the chip, refer to beneficial effects of the corresponding method provided above. Details are not described herein again.

A person of ordinary skill in the art may be aware that the units and algorithm steps in the examples described with reference to the embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application. The foregoing storage medium includes any medium that may store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A process control method, comprising:

   obtaining information about a first process and a third process that are of a first application running on a terminal device; and
   killing the first process and retaining the third process based on the information about the first process and the third process.

2. The method according to claim 1, wherein the information about the first process and the third process comprises: a main process, a foreground process or a background process, an audio interaction process, a navigation process, an upload or download process, a step counting process, adj information, and adjType information.

**3.** The method according to claim 1 or 2, wherein the method further comprises:

marking a package name and a process name that are of the first process; and
controlling the first process based on a marking result of the first process.

**4.** The method according to claim 3, wherein the first application further comprises a second process, and the method further comprises:

determining whether the second process is marked based on a package name and a process name that are of the second process; and
controlling the second process based on a determining result, wherein duration of the control is a first time period.

**5.** The method according to claim 3 or 4, wherein the marking a package name and a process name that are of the first process further comprises: marking a first moment at which the first process is killed.

**6.** The method according to claim 4 or 5, wherein the controlling the second process based on a determining result of the second process comprises:

starting the second process;
determining, based on the package name and the process name that are of the second process, that the second process is a killed process; and
prohibiting the second process from being started.

**7.** The method according to claim 4 or 5, wherein the controlling the second process based on a determining result of the second process comprises:

starting the second process;
determining, based on the package name and the process name that are of the second process, that the second process is a killed process;
determining whether the second process is a user-perceivable process, wherein the user-perceivable process comprises a foreground process and/or a process visible on an interface and/or an alarm process; and
if the second process is a user-perceivable process, allowing the second process to be started; or
if the second process is not a user-perceivable process, prohibiting the second process from being started.

**8.** The method according to claim 7, wherein the allowing the second process to be started comprises:

obtaining a second moment at which the second process is started; and
if an interval between the second moment and the first moment is less than a first threshold, increasing a quantity of valid restart times of the first process by 1.

**9.** The method according to claim 8, wherein before the determining to kill the first process, the method further comprises:

obtaining the quantity of valid restart times of the first process; and
if the quantity of valid restart times is greater than a second threshold, determining to retain the first process.

**10.** A process control apparatus, comprising:

an obtaining module, configured to obtain information about a first process and a third process that are of a first application running on a terminal device; and
an execution module, configured to kill the first process and retain the third process based on the information about the first process and the third process.

**11.** The apparatus according to claim 10, wherein the information about the first process and the third process comprises: a main process, a foreground process or a background process, an audio interaction process, a navigation process, an upload or download process, a step counting process, adj information, and adjType information.

**12.** The apparatus according to claim 10 or 11, wherein the execution module is further configured to:

mark a package name and a process name that are of the first process; and
control the first process based on a marking result of the first process.

**13.** The apparatus according to claim 12, wherein the first application further comprises a second process, and the execution module is further configured to:

determine whether the second process is marked based on a package name and a process name that are of the second process; and
control the second process based on a determining result, and control the third process, wherein duration of the control is a first time period.

**14.** The apparatus according to claim 12 or 13, wherein that the execution module marks the package name and the process name that are of the first process further comprises: marking a first moment at which the first process is killed.

15. The apparatus according to claim 13 or 14, wherein that the execution module controls the second process based on the determining result of the second process comprises:

> starting the second process;
> determining, based on the package name and the process name that are of the second process, that the second process is a killed process; and
> prohibiting the second process from being started.

16. The apparatus according to claim 13 or 14, wherein that the execution module controls the second process based on a second determining result comprises:

> starting the second process;
> determining, based on the package name and the process name that are of the second process, that the second process is a killed process; and determining whether the second process is a user-perceivable process, wherein the user-perceivable process comprises a foreground process and/or a process visible on an interface and/or an alarm process; and
> if the second process is a user-perceivable process, allowing the second process to be started; or
> if the second process is not a user-perceivable process, prohibiting the second process from being started.

17. The apparatus according to claim 16, wherein the allowing the second process to be started further comprises:

> obtaining a second moment at which the second process is started; and
> if an interval between the second moment and the first moment is less than a first threshold, increasing a quantity of valid restart times of the first process by 1.

18. The apparatus according to claim 17, wherein before a determining module determines to kill the first process, the apparatus further comprises:

> obtaining the quantity of valid restart times of the first process; and
> if the quantity of valid restart times is greater than a second threshold, determining to retain the first process.

19. An electronic device, comprising:

> a memory, configured to store a program; and
> a processor, configured to execute the program stored in the memory, wherein when the program stored in the memory is executed, the processor is configured to perform the method according to any one of claims 1 to 9.

20. A computer-readable storage medium, wherein the computer-readable storage medium stores program code, and the program code comprises instructions for performing some or all steps of the method according to any one of claims 1 to 9.

FIG. 1

**Process display**

| Application | Status |
|---|---|
| Health | Running |
| Album | Running |
| Camera | Running |
| Settings | Running |

| Quantity of processes: 25 | CPU: 50% | Memory: 62% |
|---|---|---|

**Process display**

Health

| Process | CPU | Memory |
|---|---|---|
| Process 1 | 5% | 8% |
| Process 2 | 3% | 6% |
| Process 3 | 1% | 2% |

| Quantity of processes: 25 | CPU: 50% | Memory: 62% |
|---|---|---|

FIG. 2

FIG. 3

S401. Obtain information, a package name, and a process name that are of a first process of a first application running on a terminal device

S402. Determine, based on the information of the first process, to kill the first process

S403. Mark the package name and the process name that are of the first process

S404. Based on marking results of a package name and a process name that are of a second process, control the second process

FIG. 4

FIG. 5

Retain ← Intelligent decision engine → Not retain

Update → Learning result ← Engine correction

Mark the process with a timestamp

End ← No ← Process startup ← Kill

Yes

Foreground — Yes →
No
With a visible interface — Yes →
No
Alarm type — Yes →
No
Intercept

Not intercept

Within 10 seconds from the mark — No →
Yes
End
More than 3 times — No →

FIG. 6

Process control apparatus 700

| Obtaining module 701 | Determining module 702 | Execution module 703 |

FIG. 7

Process control apparatus 800

| Memory 801 | | Processor 802 |

Bus 804

Communications interface 803

FIG. 8

## INTERNATIONAL SEARCH REPORT

| International application No. |
| --- |
| **PCT/CN2021/118827** |

**A. CLASSIFICATION OF SUBJECT MATTER**

G06F 9/50(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 进程, 管控, 设备, 清理, 标记, 启动, 禁止, 包, process, manag+, control, device, clear, flag, boot, forbid, package

**C. DOCUMENTS CONSIDERED TO BE RELEVANT**

| Category* | Citation of document, with indication, where appropriate, of the relevant passages | Relevant to claim No. |
| --- | --- | --- |
| X | CN 104375880 A (TENCENT TECHNOLOGY SHENZHEN CO., LTD.) 25 February 2015 (2015-02-25)<br>description paragraphs [0025]-[0053], figure 1 | 1-2, 10-11, 19-20 |
| Y | CN 104375880 A (TENCENT TECHNOLOGY SHENZHEN CO., LTD.) 25 February 2015 (2015-02-25)<br>description paragraphs [0025]-[0053], figure 1 | 3-9, 12-18 |
| Y | CN 110543365 A (GUANGDONG OPPO MOBILE TELECOMMUNICATIONS CORP., LTD.) 06 December 2019 (2019-12-06)<br>description paragraphs [0047], [0049], [0051]-[0054], [75] | 3-9, 12-18 |
| A | CN 112416549 A (GREE ELECTRIC APPLIANCES, INC. OF ZHUHAI) 26 February 2021 (2021-02-26)<br>entire document | 1-20 |
| A | CN 109213539 A (HUAWEI TECHNOLOGIES CO., LTD.) 15 January 2019 (2019-01-15)<br>entire document | 1-20 |
| A | US 10659534 B1 (OPEN INVENTION NETWORK, L.L.C.) 19 May 2020 (2020-05-19)<br>entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 December 2021** | **14 December 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/118827**

| Patent document cited in search report | | | Publication date (day/month/year) | Patent family member(s) | Publication date (day/month/year) |
|---|---|---|---|---|---|
| CN | 104375880 | A | 25 February 2015 | None | |
| CN | 110543365 | A | 06 December 2019 | None | |
| CN | 112416549 | A | 26 February 2021 | None | |
| CN | 109213539 | A | 15 January 2019 | None | |
| US | 10659534 | B1 | 19 May 2020 | None | |

Form PCT/ISA/210 (patent family annex) (January 2015)

**REFERENCES CITED IN THE DESCRIPTION**

**Patent documents cited in the description**

- CN 202010993180